# EUROPEAN PATENT SPECIFICATION

(11) **EP 2 361 145 B1**
(45) Date of publication and mention of the grant of the patent: **14.09.2016**
(21) Application number: 09828696.6
(22) Date of filing: 13.11.2009
(51) Int. Cl.: B01J 19/18, B01F 5/04, B01F 3/04, B01J 19/00

(54) **AN OPEN PRESSURISED AGITATED REACTOR AND A METHOD FOR MIXING GAS AND SLURRY WITH EACH OTHER**
OFFENER UNTER DRUCK STEHENDER RÜHRREAKTOR UND VERFAHREN ZUR VERMISCHUNG VON GAS UND SCHLÄMMUNG
RÉACTEUR AGITÉ SOUS PRESSION OUVERT ET PROCÉDÉ POUR LE MÉLANGE DE GAZ ET DE MÉLANGE SEMI-LIQUIDE L'UN AVEC L'AUTRE

(30) Priority: 25.11.2008 FI 20080633
(43) Date of publication of application: 31.08.2011
(73) Proprietor: Outotec Oyj, 02230 Espoo (FI)
(72) Inventor: HULTHOLM, Stig-Erik, FI-28360 Pori (FI); LILJA, Launo, FI-28100 Pori (FI); NYMAN, Bror, FI-28540 Vanha-Ulvila (FI); PEKKALA, Pertti, FI-02330 Espoo (FI); RUONALA, Mikko, FI-02460 Kantvik (FI); TIIHONEN, Jari, FI-28330 Pori (FI); VAARNO, Jussi, 02450 Sundsberg (FI)
(74) Representative: Papula Oy
(86) International application number: PCT/FI2009/050911
(87) International publication number: WO 2010/061054

(56) References cited:
- WO-A1-01/12307
- WO-A1-01/12308
- US-A- 3 892 535

## Description

### FIELD OF THE INVENTION

The invention relates to apparatus for performing hydrometallurgical processes under pressurised conditions. The apparatus consists of a tall vertical reactor and a pressurised horizontal reactor located beneath it. The vertical reactor for its part comprises two nested tubes, so that the upper part of the inner tube is equipped with a downdraft mixer and elements that intensify the absorption of the gas into the slurry, such as venturis. The slurry is fed into the inner tube to flow downwards and the reaction gas is fed into the upper part of the inner tube at one point at least. The vertical reactor is connected at its lower section to an autoclave-type horizontal reactor, which is equipped with effective radial mixers to keep the slurry suspension in motion and to achieve an upflow to convey the slurry suspension into the outer tube of the vertical reactor. In the method accordant with the invention the length of contact time occurring under pressure between the gas and slurry is extended by means of the horizontal reactor.

### BACKGROUND OF THE INVENTION

An apparatus is disclosed in US patent 4,648,973, in which oxygen-containing gas is fed into an open pressurised reactor, known as a counterbubble reactor, mainly into its upper section, where it is dispersed into a suspension of solids and solution by means of venturis. The vertical reactor comprises two nested tubes, in which the slurry suspension flows downwards in the inner tube towards the bottom of the reactor and from there further upwards in the annular outer tube that surrounds the inner tube. The vertical reactor works well as long as it is in operation, but the problem with the reactor is the difficulty of setting the slurry suspension in motion again after a stoppage, since during a break the solids settle to the bottom of the reactor and form an immovable bed. Attempts have been made to solve this problem, for instance by notching the lower end of the inner tube into a wedge shape, so that setting in motion the solution above the bed is easier. It is also possible to start things moving by pulsation pumping. Also, feeding the gas under the bed of settled solids gets the suspension moving enough that the flow in the reactor starts up. However, the means presented are often insufficient, and particularly if the solids content of the slurry or the density of the solids is high, the reactor has to be emptied before it can be started up again.

Horizontal autoclaves are known per se and are closed in order to maintain pressure.

### PURPOSE OF THE INVENTION

The vertical reactor disclosed in the prior art, in other words, an open autoclave, works faultlessly in normal conditions, but as stated above, start-up after a stoppage often produces insurmountable difficulties, especially if the height of the reactor is for example over 30 m.

The object of the apparatus accordant with this invention is to eliminate the drawbacks of a vertical reactor presented above by combining an open vertical reactor with a horizontal reactor, which is a horizontal autoclave type. Appropriate dimensioning of the vertical reactor attains the desired pressure in the lower section of the reactor and in the horizontal reactor, and the magnitude of the pressure in turn depends on the material to be treated and the slurry density. When a horizontal reactor is dimensioned so that its volume corresponds at minimum to the volume of the solids in the slurry to be mixed and is equipped with effective radial mixers, the disadvantages of a vertical reactor can be prevented and the apparatus acts as a pressurised reactor, which is nevertheless open at its top end. The advantage of a horizontal reactor connected to a vertical reactor in addition to the above is the residence time provided by the horizontal reactor for the reactions between the slurry and gas fed into the apparatus. The filling degree of the slurry in the horizontal reactor in the method and apparatus accordant with the invention is 100%, because the gas space required is in the upper section of the vertical reactor and in this case the efficiency of the horizontal reactor in particular is high. In a normal autoclave the slurry filling degree is at most around 80%, because the required gas space also needs to be there.

The object of the apparatus and method accordant with the invention is to eliminate the described shortcomings of the equipment of the prior art and to present a simple apparatus for more effective mixing of reaction gas into slurry, increasing the mixing intensity and spreading the gas bubbles that are formed into the slurry in order to achieve the desired reactions.

### SUMMARY OF THE INVENTION

The essential features of the invention will be made apparent in the attached claims.

The invention relates to an apparatus for processing slurry with a high solids content or solids with a high specific weight and the gas fed into it. The apparatus comprises at least one open vertical reactor, which consists of two tubes nested one inside the other, an inner and an outer tube, where the inner tube is equipped with a downdraft mixer and elements to intensify the gas feed. It is typical of the apparatus that a cylindrical horizontal reactor is fixed to the lower section of the vertical reactor, and that the horizontal reactor is equipped with radial mixers that fluidise the solids and promote a circulating flow from the horizontal reactor into the outer tube of the vertical reactor.

It is typical of the apparatus that the volume of the horizontal reactor is 20 - 80% of the total volume of the apparatus, and that the height of the vertical reactor is many times greater than the diameter D of its central section.

Preferably there is an expansion section in the upper part of the vertical reactor, in which an inner and outer surface are formed on the inner tube so that the cross-sectional area of the annular part between the outer surface of the inner tube and the outer tube is at most the same as the cross-sectional area of the annular part between the inner and outer tubes in the other sections of the vertical reactor. The diameter of the outer tube in the expansion section is 2 - 20 times the diameter D of the outer tube in the central section of the reactor.

According to one embodiment of the invention, the upper sections of the outer and inner surfaces of the inner tube are shaped conically. In one embodiment a cone guide directed inwards from the rim of the outer tube is located above the upper section of the inner tube. The cone guide is constructed to ascend upwards from the rim of the outer tube at an angle of 30 - 75° for a distance that is 0.1 - 0.2 times the diameter of the expansion and then to descend at an angle of 15 - 50°.

According to one embodiment of the invention, the inner tube of the vertical reactor extends at its lower rim inside the horizontal reactor for a distance that is 0.1 - 0.14 times the height of the horizontal reactor.

The blades of the horizontal reactor mixers are preferably placed at a height that is 0.70 - 0.85 times the height of the horizontal reactor and the mixers are made to rotate in opposite directions.

In one embodiment of the invention, an overhang of the lower rim of the vertical reactor outer tube extends inside the horizontal reactor in the 100-140° sector to the level of the horizontal reactor mixer blades. The junction of the vertical and horizontal reactors is additionally equipped with baffles, which are attached to the lower section of the inner tube and directed outwards for a distance that is in the ration of 0.2 - 0.3 times the diameter of the inner tube. The junction baffles are located on the opposite side to the overhang of the vertical reactor outer tube and symmetrically at an angle of 110 - 130° to each other. The baffles of the reactor junction extend in elevation from the upper edge of the horizontal reactor to the height of the mixer blades.

In one embodiment of the invention, the horizontal reactor is equipped with baffles located around each mixer, directed towards the walls of the horizontal reactor.

The apparatus accordant with the invention can also be formed from a combination of several vertical and horizontal reactors, whereby the number of vertical reactors and the horizontal reactors fixed to them is 2 - 10, the horizontal reactors are connected to each other and between each there is a partition wall provided with flow apertures. According to one alternative, the inner tube of one vertical reactor in the combination is connected to the annular section of another vertical reactor. A combination of several reactors can also be positioned in a U-shape.

The invention also relates to a method for processing slurry with a high solids content or solids with a high specific weight and the gas fed into it in an open apparatus, where high hydrostatic pressure is formed in its lower section, so that the slurry and the gas fed into it are made to flow downwards in the inner tube of at least one open vertical reactor and to rise upwards in the outer tube of the vertical reactor. It is typical of the method that the suspension of slurry and gas is routed from the inner tube of the vertical reactor further into a cylindrical horizontal reactor fixed below the vertical reactor to prolong the residence time for the reactions between the slurry and gas, and that the suspension is made to rise from the horizontal reactor into the outer tube of the vertical reactor by means of mixers that fluidise the solids and promote a circulation flow from the horizontal reactor to the vertical reactor. In this method, the inner tube is equipped with a downdraft mixer and elements for intensifying gas feed. The mixers in the horizontal reactor are radial mixers.

In the method accordant with the invention, the volume of the horizontal reactor is dimensioned to correspond at minimum to the volume of the slurry solids treated in the apparatus.

According to one embodiment of the method, in order to lead the gas flowing with the slurry into circulation again from the outer tube of the vertical reactor to the inner tube, the suspension of gas and slurry is made to flow from the outer tube into the expansion space of the upper section and via its throat-like channel structure to the inner tube. According to one embodiment, the cross-sectional area of the throat-like channel structure decreases towards the centre of the expansion section and the flow rate of the slurry is regulated to the region of 0.9 - 1.2 m/s.

It is typical of the method accordant with the invention that the horizontal reactor mixers bring about radial slurry streams that eddy against each other and that these flows running against each other are attenuated by the baffles located at the reactor junctions and by means of the overhang on the lower section of the outer tube, and that the direction of the slurry stream is diverted to flow up into the outer tube.

According to one embodiment of the invention, the processing of the slurry and gas is performed in a combination formed of several vertical and horizontal reactors. In this case the transfer of the slurry suspension from one vertical and horizontal reactor configuration to another takes place via the interconnected horizontal reactors. According to one alternative, the slurry suspension may also be recycled by routing it from the inner tube of one vertical reactor to the annular section of another vertical reactor.

### LIST OF DRAWINGS

Figure 1 is a vertical section of the apparatus accordant with the invention,
Figure 2 presents a side view of the upper section of the apparatus in more detail,
Figure 3 shows a side view of the lower section of the apparatus in more detail, and
Figure 4 presents an apparatus, which comprises several vertical reactors and interconnected horizontal reactors.

### DETAILED DESCRIPTION OF THE INVENTION

An apparatus accordant with the invention, which comprises a vertical and horizontal reactor combination, is particularly advantageous for chemical processes where a slurry with a high solids content or a slurry in which the solids have a high specific weight is oxidised by means of an oxygen-containing gas and it is desired to have a high oxygen efficiency. A high solids content here means that the solids content of the slurry is around 40-70%. In this case there are often difficulties in achieving an effective contact between the gas and the slurry without a sufficiently high pressure, such as for example hydrostatic pressure, and a sufficiently long residence time. The apparatus and method accordant with the invention also eliminate the difficulty of starting up the process again after an operating break, since the horizontal reactor is dimensioned to be such that its volume corresponds at minimum to the volume of solids in the slurry being processed in the apparatus. In addition, the horizontal reactor is equipped with effective mixers with which the solids are made to flow from the horizontal reactor into the outer tube of the vertical reactor.

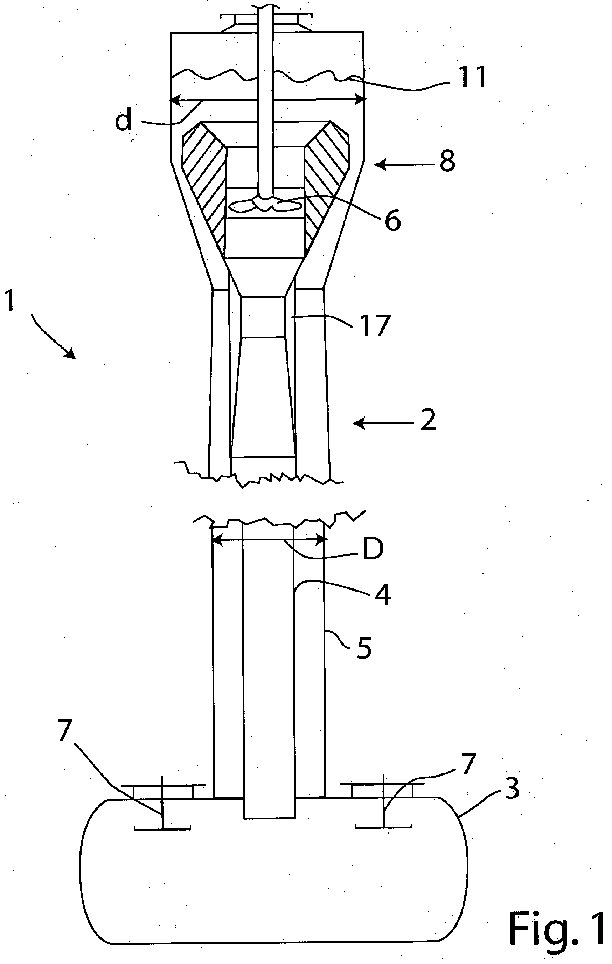

The apparatus and method accordant with the invention are described in more detail by means of the attached drawings. Figure 1 shows that the apparatus 1 clearly consists of two parts, a vertical reactor 2 open at the top and a horizontal reactor 3, which are connected to each other. Both reactors have their own mixing elements. Regarding the vertical reactor, it comprises two nested tubes, an inner tube 4 and an outer tube 5. The slurry to be processed that is formed of solids and liquid is fed by a known method into the upper section of the inner tube or the lower section of the horizontal reactor.

The height of the vertical reactor is always many times that of its diameter, when the diameter D is measured from the central section of the vertical reactor outer tube. The vertical reactor may be constructed to the desired height, for instance between 10 - 80 m and the vertical reactor is the drawing is shown cut off. The taller the vertical reactor, the higher the hydrostatic pressure of the lower section of the vertical reactor and of the horizontal reactor. Raw materials having low metal content, such as tailings of mines, can be processed in the reactor cost-effectively. In this case, for example when processing sulphidic materials, the conditions can be regulated so that the temperature of the slurry in the upper section of the vertical reactor is almost at boiling point, so that the water balance of the process can be handled by means of evaporation. When using sulphide materials and oxygen heating may even function autogenously.

Obviously, the upper part of the outer tube in the vertical reactor is higher than that of the inner tube, so that the slurry flowing in the annular space between the outer and inner tube can be diverted to flow back into the inner tube. A mixer element 6 is installed in the upper section of the inner tube 4, providing as strong a downward flow as possible to the slurry. At least two mixers 7 are installed in the cover of the cylindrical horizontal reactor, which provide a powerful flow and at the same time effective mixing energy. There may be several mixers in the horizontal reactor, two of which are seen in the drawing. The operational requirements of the mixers located closest to the vertical reactor additionally include that the mixers preferably form an upflow in the slurry toward the outer tube 5 of the vertical reactor. The mixers of the horizontal reactor are dimensioned so that the power they provide is sufficient to set in motion the solids that have settled in the reactor during a break in operation and make them flow in the tubes of the vertical reactor. If additional gas is to be fed into the horizontal reactor, the mixers should also be able to disperse this into the slurry.

The vertical reactor in the apparatus accordant with the invention is in principle of the type described in US patent 4,648,973 and it is connected at its lower section to an autoclave-type, cylindrical horizontal reactor. At its simplest the horizontal reactor is single-segment and the vertical reactor is attached to its central section. The horizontal reactor is preferably equipped with at least two mixers directed downwards from its cover section that are located on either side of the vertical reactor.

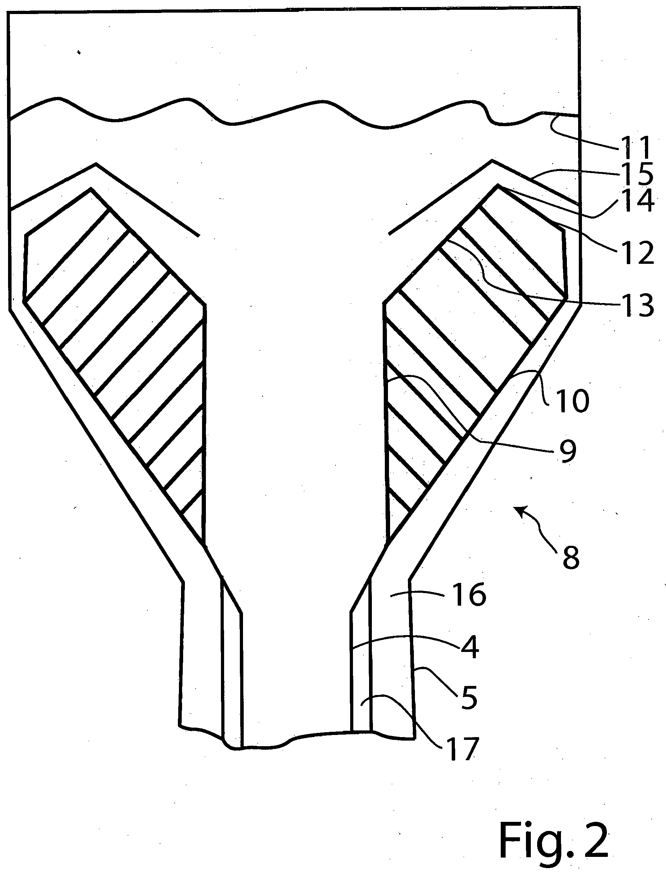

In the case accordant with Figures 1 and 2, an expansion section 8 is formed in the upper section of the vertical reactor. In the expansion section the upper part of the inner tube 4 is formed so that it has an inner surface 9 and an outer surface 10. The outer surface of the inner tube is shaped so that the cross-sectional area of the annular space of the outer and inner tubes remains more or less the same as in the central section of the vertical reactor. When the reactor is operational, the surface of the liquid 11 in the reactor is higher than the upper rim of the inner tube. The upper section 12 of the outer surface of the inner tube and the upper part 13 of the inner surface are preferably shaped as a cone so that they decrease the flow resistance.

The vertical reactor may further be equipped above the upper section of the inner tube and its upper rim 14 with a cone guide 15 directed inwards from the rim of the outer tube. A cone guide is constructed to ascend from the rim, of the outer tube upwards first at an angle of 30 - 75° for a distance of 0.10 - 0.2 times the diameter of the expansion 8 and thereafter to descend at an angle of 15 - 50°. The portion of the cone guide in the descending angle is directed towards the centre of the expansion and extends preferably to the depicted extension of the inner surface 9 of the inner tube. In this case it forms a throat-like channel structure directed towards the inner tube, through which channel the suspension of slurry and gas that has risen up in the outer tube is diverted to flow back into the inner tube. The distance of the cone guide from the inner tube can also be determined according to how large a part of the circulation gas it is wished to route back into circulation again. When the cone guide is shaped and located so that the cross-sectional area of the channel achieved by this means is reduced evenly and the flow rate of the slurry is regulated to the region of 0.9 - 1.2 mis, it is possible to get almost 100 % of the gas back into circulation.

The cone guide is intended for use in such conditions where it is wished to get the gas, which is flowing upwards with the slurry in the annular section 16 circumscribing the outer and inner tubes, back into circulation, i.e. to flow downwards in the inner tube 4 of the reactor. The gas to be kept in the stream is for example an oxygen-containing gas, which has not yet had time to react with the slurry.

If one wishes to separate the gas flowing with the slurry in the expansion section from the stream, the cone guide is not used. Gas that is to be separated from the flow on the other hand is an inert gas, for instance nitrogen or carbon dioxide, which is removed from the stream of slurry in the reactor expansion section (not shown in detail in the drawing). The structure of the expansion section 8 is formed in accordance with the gas to be processed so that the diameter d of the outer tube in it may be around 2 - 20 times that of the diameter D of the outer tube in the centre section of the reactor. The greater the amount of gas to be removed from circulation, the greater the diameter of the expansion section. The processed slurry is removed for example from the upper section of the reactor by known methods as the overflow.

At least one throttling point is placed in the inner tube in the tubular section of the vertical reactor, such as a venturi 17, and the gas to be fed into the slurry is supplied at the throttling point or above it, as described in US patent 4,648,973. When gas is fed into the vertical reactor, the required pressure is lower than when feeding into the horizontal reactor. Where necessary extra gas may however also be fed into the horizontal reactor.

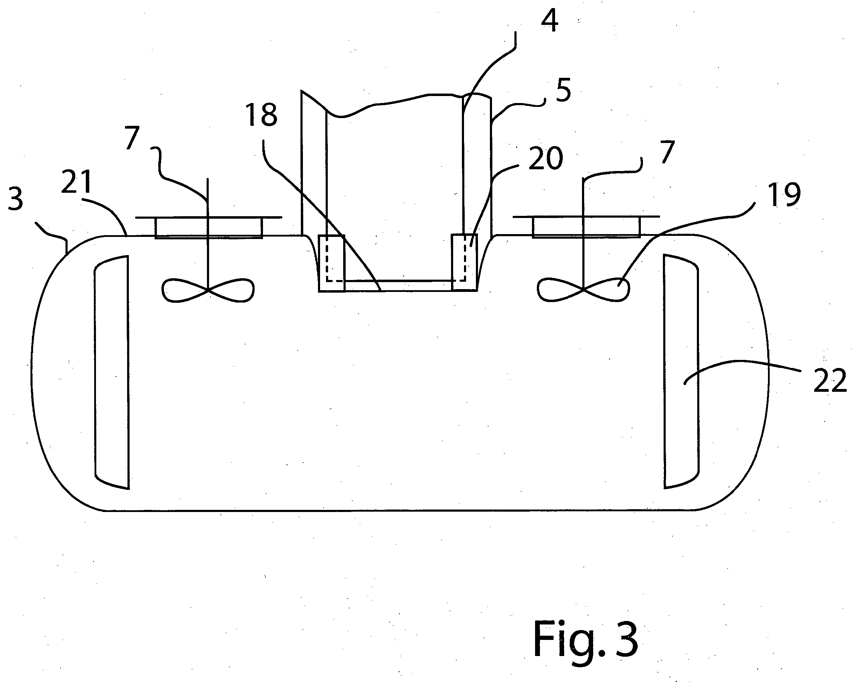

At its lower section the vertical reactor 2 is connected to the horizontal reactor 3. The volume of the horizontal reactor is dimensioned so that it corresponds at minimum to the volume of the solids in the slurry to be processed in the apparatus. Figure 3 illustrates the junction of the reactors in more detail. The inner tube 4 of the vertical reactor is made to extend inside the horizontal reactor for a distance that is 0.10 - 1.14 times the height of the horizontal reactor. Part of the outer tube 5 of the vertical reactor is connected to the cover section of the horizontal reactor, but one part of the lower rim, the overhang 18, preferably in the 100 - 140° sector, is made to extend inside the horizontal reactor, essentially to the level of the blades 19 of the horizontal reactor mixers 7.

The horizontal reactor mixers are radial mixers, whereby their function is to fluidise the solids in the slurry and to promote the circulation of the vertical reactor. The blades of the mixers are located at a height from the bottom of the reactor that is around 0.70 - 0.85 times the height of the reactor. In normal autoclaves the mixers are located far lower, because if they were at the height accordant with this invention they would be mostly in the gas space. In the apparatus accordant with the invention, the mixers of the horizontal reactor are made to rotate in opposing directions and the impact obtained by the flows eddying against each other caused by the mixers is attenuated by the above-mentioned downward-facing overhang 18 and further by the baffles 20 located at the reactor junctions. These baffles are attached to the lower section of the inner tube and are directed outwards from it. Even though the reactor junction baffles 20 even out the impact on the slurry stream caused by the horizontal reactor mixers 7, the baffles and mixers are dimensioned and located so that, nevertheless, together they augment the circulation flow from the horizontal reactor to the vertical reactor. The width of the junction baffles 20 is preferably around 0.2 - 0.3 times the diameter of the inner tube. In terms of elevation these baffles extend from the height of the upper edge 21 of the horizontal reactor to the height of the mixer blades. The baffles are two in number and are located on the opposite side to the downward-facing section 18 of the outer tube and symmetrically at a 110 - 130° angle to each other.

The model of mixers used in the horizontal reactor is chosen according to the slurry to be processed and may be for instance pitch blade-type mixers, for example six-blade mixers, where the blade angle is in the region of 28 - 38°, so that power offtake occurs as advantageously as possible. The mixers may also be foil-type, where the mixer blades are profiled for instance so that the blade angle and width of the blade decreases towards the tip of the blade. If additional gas is fed into the horizontal reactor, the horizontal reactor mixers should not only divert the flow upwards, but also disperse gas effectively. One applicable mixer model is the lower mixer of the mixing device described in US patent 7,070,174, which works well in the fluidising of difficult solids. The horizontal reactor is preferably further equipped with baffles 22 situated around each mixer, and their number per mixer is 2-3. The baffles are directed towards the walls of the horizontal reactor, but not in between the mixer and the vertical reactor.

The function of the horizontal reactor mixers and baffles, like that of the structure of the junction of the reactors described above, is to divert the slurry-gas suspension exiting the inner tube of the vertical reactor to flow back upwards in the annular section 16 of the vertical reactor.

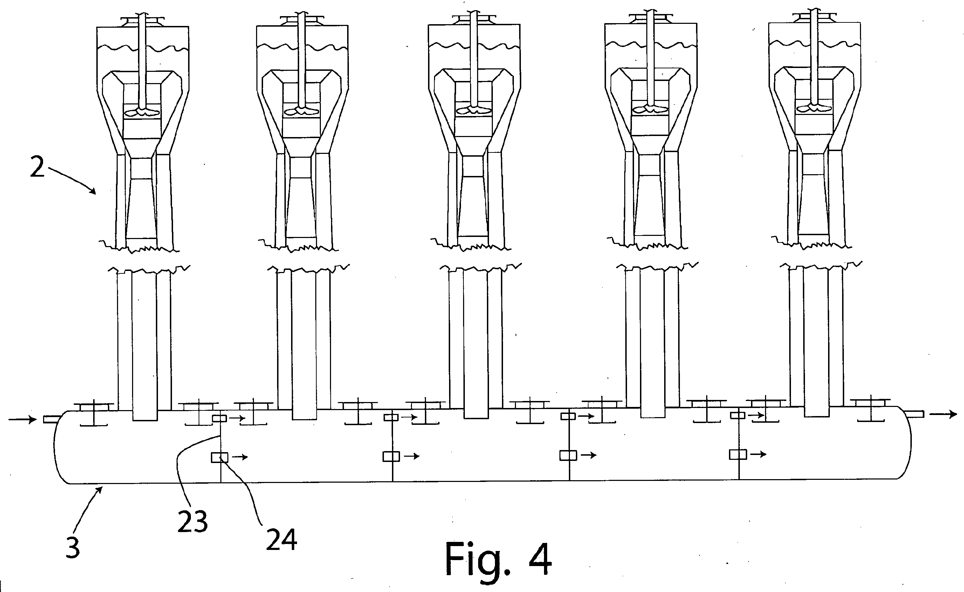

When material that demands for example a long residence time is processed in the apparatus accordant with the invention, a combination consisting of several vertical and horizontal reactors may be used for processing the slurry and gas, whereby the horizontal reactors are connected to each other for example in the way shown in Figure 4. A partition wall 23 is made between the horizontal reactors, which is nevertheless equipped with flow apertures 24, through which the slurry suspension is made to flow from one horizontal reactor to another. However, the apparatus is designed so that the slurry circulates in each vertical reactor before being transferred to the following compartment. If the process demands internal circulation for example from a later stage in the direction of flow to the front end of the process, it is preferable to implement this by routing slurry from the inner tube of some vertical reactor at the tail end of the apparatus at a higher pressure to the annular section of some earlier vertical reactor, to a point where the hydrostatic pressure is lower, so that separate pump lines are not required. The multi-stage apparatus in Figure 4 is in the form of a train, i.e. all the stages are consecutive, but to save space it is also possible to construct it in a U-shape for example. The number of vertical and horizontal reactor devices in the combination is typically between 2 and 10.

In normal situations, the apparatus and method accordant with the invention operate so that the slurry formed of solids and liquid that is to be processed is fed into the inner tube 2 of the vertical reactor or into the horizontal reactor 3. The inner tube mixer 6 is set at such revolutions that a rate of rise is achieved in the slurry stream in the annular part 16 between the outer and inner tube, at which even the coarsest solid particles of the slurry rise upwards. A gas, such as oxygen, is fed into or in the vicinity of the venturi 17 of the inner tube. The slurry suspension that is formed, into which the dispersed gas is mixed, is pressed along the inner tube to the lower section of the tube by means of the inner tube mixer. In the lower section the suspension is made to discharge into the horizontal reactor and mix into the slurry that is there. By means of the mixers and the structure of the reactor junction, a corresponding amount of slurry is made to rise from the horizontal reactor into the outer tube of the vertical reactor and to rise up in the annular section towards the expansion of the upper section. The direction of the suspension in the upper section of the vertical reactor is diverted thanks to the suction effect of the inner tube mixer to flow back downwards. As stated above, the expansion section is advantageously equipped with a cone guide 15 if one wishes to get the gas that has not dissolved into the slurry back into circulation again. If one wishes to discharge the undissolved gas, a cone guide is not used and the cross-sectional area of the expansion is dimensioned according to the amount of gas to be vented.

When the apparatus is started up after an operational break, it is preferable to start up the horizontal reactor mixers first, so that the settled slurry can be set in motion. When the vertical reactor mixer is also started up after this or simultaneously, the reactor is made to operate as in normal running conditions. The horizontal reactor mixers in particular should be sufficiently effective that even with the greatest energy requirements; i.e. when the solids content of the slurry is high or the solids have a high specific weight, the tip speed of the mixer blades can bye maintained at an advantageous level. This means a tip speed (5 - 7 m/s) at which the wear of the blades is still insignificant.

## Claims

1. An apparatus for processing a slurry with a high solids content or with solids of high specific weight and a gas fed into it, whereby the apparatus (1) comprises at least one open vertical reactor (2), which consists of two tubes installed in nested fashion, an inner and outer tube (4,5), in which the inner tube is equipped with a downdraft mixer and elements (17) for intensifying gas feed, **characterised in that** fixed to the lower section of the vertical reactor there is a cylindrical horizontal reactor (3), which is equipped with radial mixers (7) that fluidise the solids and promote a circulation flow from the horizontal reactor to the outer tube (5) of the vertical reactor.

2. An apparatus according to claim 1, **characterised in that** the volume of the horizontal reactor (3) is 20 - 80% of the volume of the whole apparatus (1).

3. An apparatus according to claim 1, **characterised in that** the height of the vertical reactor (2) is many times greater than the diameter D of its central section.

4. An apparatus according to claim 1, **characterised in that** an exterior surface (10) and an interior surface (9) are formed on the inner tube in an expansion section (8) of the upper part of the vertical reactor, whereby the cross-sectional area of the annular section between the exterior surface of the inner tube and the outer tube is at most the same as the cross-sectional area of the annular section between the inner tube (4) and the outer tube (5) in the other parts of the vertical reactor.

5. An apparatus according to claim 4, **characterised in that** the diameter of the outer tube in the expansion section (8) of the upper part of the vertical reactor is 2 - 20 times the diameter D of the outer tube (5) in the central section of the reactor.

6. An apparatus according to claims 1 and 4, **characterised in that** the upper sections (12,13) of the exterior and interior surfaces of the inner tube are made conical in shape.

7. An apparatus according to claims 1 and 4, **characterised in that** a cone guide (15) directed inwards from the rim of the outer tube (5) is located above the upper section (12,13) of the inner tube.

8. An apparatus according to claim 7, **characterised in that** the cone guide (15) is constructed to ascend from the rim of the outer tube at an angle of 30 - 75° for a distance that is 0.1 - 0.2 times the diameter of the expansion (8) and then to descend at an angle of 15 - 50°.

9. An apparatus according to claim 1, **characterised in that** the inner tube (4) of the vertical reactor extends at its lower edge inside the horizontal reactor (3) for a distance that is 0.1 - 0.14 times the height of the horizontal reactor.

10. An apparatus according to claim 1, **characterised in that** the mixer blades (19) of the horizontal reactor are located at a height that is 0.70 - 0.85 times the height of the horizontal reactor.

11. An apparatus according to claim 1, **characterised in that** the mixers of the horizontal reactor are made to rotate in opposing directions.

12. An apparatus according to claim 1, **characterised in that** an overhang (18) of the lower rim of the vertical reactor outer tube (5) extends inside the horizontal reactor (3) in the 100 - 140° sector to the level of the blades (19) of the horizontal reactor mixers (7).

13. An apparatus according to claim 1, **characterised in that** the junction of the vertical and horizontal reactor is equipped with baffles (20), which are fixed to the lower section of the inner tube and directed outwards from there for a distance that is in the region of 0.2 - 0.3 times the diameter of the inner tube (4).

14. An apparatus according to claims 1 and 12, **characterised in that** the baffles (20) of the junction of the vertical and horizontal reactors are located on the opposite side to the overhang (18) of the vertical reactor outer tube and symmetrically at an angle of 110 - 130° to each other.

15. An apparatus according to claim 13, **characterised in that** the baffles (20) of the reactor junction extend in terms of elevation from the upper edge (21) of the horizontal reactor to the height of the mixer blades (19).

16. An apparatus according to claim 1, **characterised in that** the horizontal reactor (3) is equipped with baffles (22) situated around each mixer (7), and directed towards the walls of the horizontal reactor.

17. An apparatus according to claim 1, **characterised in that** the apparatus consists of a combination of several vertical and horizontal reactors, whereby the number of vertical reactors and the horizontal reactors attached to them is 2 - 10, the horizontal reactors are connected to each other and a partition wall (23) provided with flow apertures (24) is situated between each of them.

18. An apparatus according to claim 17, **characterised in that** in the combination the inner tube (4) of one vertical reactor is connected to the annular section (16) of another vertical reactor.

19. An apparatus according to claim 17, **characterised in that** the multi-reactor combination is arranged in a U-shape:

20. A method for processing a slurry with a high solids content or with solids of high specific weight and a gas fed into it in an open apparatus (1), in the lower section of which a high hydrostatic pressure is formed, whereby the slurry and the gas fed into it are made to flow downwards in the inner tube (4) of at least one open vertical reactor (2), the inner tube (4) being equipped with a downdraft mixer and elements (17) for intensifying gas feed, and to rise upwards in the outer tube (5) of the vertical reactor, **characterised in that** the suspension of slurry and gas is routed from the inner tube (4) of the vertical reactor on to a cylindrical horizontal reactor (3), which is equipped with radial mixers (7), attached underneath the vertical reactor in order to lengthen the residence time for the reactions between the slurry and the gas, and from the horizontal reactor the suspension is made to rise into the outer tube (5) of the vertical reactor by means of radial mixers (7) that fluidise the solids and promote a circulation flow from the horizontal reactor to the vertical reactor.

21. A method according to claim 20, **characterised in that** the volume of the horizontal reactor (3) is dimensioned to correspond at minimum to the volume of solids in the slurry to be processed in the apparatus.

22. A method according to claim 20, **characterised in that** in order to route the gas flowing with the slurry into circulation again from the outer tube (5) of the vertical reactor to the inner tube (4), the suspension of gas and slurry is made to flow from the outer tube (5) into an expansion space (8) of the upper section and via its throat-like channel structure into the inner tube (4).

23. A method according to claim 22, **characterised in that** the cross-sectional area of the throat-like channel structure gets smaller towards the centre of the expansion section (8) and the flow rate of the slurry is regulated to the region of 0.9 - 1.2 m/s.

24. A method according to claim 20, **characterised in that** the blades (7) of the horizontal reactor (3) achieve radial slurry flows that run against each other.

25. A method according to claims 20 and 24, **characterised in that** the flows running against each other are attenuated by means of baffles (20) located at the junction of the reactors and an overhang (18) of the lower section of the outer tube and the direction of the slurry flow is diverted to rise into the outer tube (3).

26. A method according to claim 20, **characterised in that** the processing of the slurry and gas is performed in a combination of several vertical and horizontal reactors.

27. A method according to claim 26, **characterised in that** the transfer of the slurry suspension from one vertical and horizontal reactor device to another occurs via interconnected horizontal reactors.

28. A method according to claim 26, **characterised in that** the slurry suspension is recycled by routing it from the inner tube (4) of one vertical reactor to the annular section (16) of another vertical reactor.

## Patentansprüche

1. Vorrichtung zum Verarbeiten einer Aufschlämmung mit hohem Feststoffgehalt oder mit Feststoffen mit hohem spezifischen Gewicht und einem Gas, welches darin eingespeist wird, wobei die Vorrichtung (1) mindestens einen offenen vertikalen Reaktor (2) umfasst, der aus zwei Rohren besteht, die in einer verschachtelten Art installiert sind, einem innerem und einem äußeren Rohr (4, 5), wobei das innere Rohr mit einem Fallstrommischer und Elementen (17) zur Intensivierung der Gaszufuhr ausgestattet ist, **dadurch gekennzeichnet, dass** zu dem unteren Abschnitt des vertikalen Reaktors ein zylindrischer horizontaler Reaktor (3) befestigt ist, der mit Radialmischern (7) ausgestattet ist, die die Feststoffe verflüssigen und eine Zirkulationsströmung von dem horizontalen Reaktor zu dem äußerem Rohr (5) des vertikalen Reaktors fördern.

2. Vorrichtung nach Anspruch 1, **dadurch gekennzeichnet, dass** das Volumen des horizontalen Reaktors (3) 20 - 80% des Volumens der gesamten Vorrichtung (1) ist.

3. Vorrichtung nach Anspruch 1, **dadurch gekennzeichnet, dass** die Höhe des vertikalen Reaktor (2) ein Vielfaches größer als der Durchmesser D seines zentralen Abschnitts ist.

4. Vorrichtung nach Anspruch 1, **dadurch gekennzeichnet, dass** eine Außenfläche (10) und eine Innenfläche (9) an dem inneren Rohr in einem Expansionsabschnitt (8) des oberen Teils des vertikalen Reaktors ausgebildet sind, wobei die Querschnittsfläche des ringförmigen Abschnitts zwischen der Außenfläche des inneren Rohres und dem äußeren Rohr höchstens gleich der Querschnittsfläche des ringförmigen Abschnitts zwischen dem inneren Rohr (4) und dem äußeren Rohr (5) in den anderen Teilen des vertikalen Reaktors ist.

5. Vorrichtung nach Anspruch 4, **dadurch gekennzeichnet, dass** der Durchmesser des äußeren Rohres in dem Expansionsabschnitt (8) des oberen Teils des vertikalen Reaktors das 2 - 20-fache des Durchmessers D des äußeren Rohres (5) in dem zentralen Abschnitt des Reaktors ist.

6. Vorrichtung nach den Ansprüchen 1 und 4, **dadurch gekennzeichnet, dass** die oberen Abschnitte (12, 13) der Außen- und Innenflächen des inneren Rohres konisch hergestellt sind.

7. Vorrichtung nach den Ansprüchen 1 und 4, **dadurch gekennzeichnet, dass** eine Konusführung (15), welche von dem Rand des äußeren Rohres (5) nach innen gerichtet ist, oberhalb dem oberen Abschnitt (12, 13) des inneren Rohres angeordnet ist.

8. Vorrichtung nach Anspruch 7, **dadurch gekennzeichnet, dass** die Konusführung (15), welche konstruiert ist, um von dem Rand des äußeren Rohres in einem Winkel von 30 - 75 ° für eine Distanz aufzusteigen, die das 0,1 - 0,2-fache des Durchmessers des Expansionsabschnitts (8) ist, und dann um in einem Winkel von 15° - 50 ° abzusteigen.

9. Vorrichtung nach Anspruch 1, **dadurch gekennzeichnet, dass** das innere Rohr (4) des vertikalen Reaktors an seinem unteren Rand sich im Inneren des horizontalen Reaktors (3) für eine Distanz erstreckt, die das 0,1 - 0,14-fache der Höhe des horizontalen Reaktors ist.

10. Vorrichtung nach Anspruch 1, **dadurch gekennzeichnet, dass** die Mischerschaufeln (19) des horizontalen Reaktors sich in einer Höhe befinden, die das 0,70 - 0,85-fache der Höhe des horizontalen Reaktors ist.

11. Vorrichtung nach Anspruch 1, **dadurch gekennzeichnet, dass** die Mischer des horizontalen Reaktors ausgebildet sind, um sich in entgegengesetzte Richtungen zu drehen.

12. Vorrichtung nach Anspruch 1, **dadurch gekennzeichnet, dass** ein Überhang (18) des unteren Randes des äußeren Rohres (5) des vertikalen Reaktors sich im Inneren des horizontalen Reaktors (3) in dem 100-140 ° -Sektor zu der Höhe der Schaufeln (19) der Mischer (7) des horizontalen Reaktors erstreckt.

13. Vorrichtung nach Anspruch 1, **dadurch gekennzeichnet, dass** die Verbindungstelle des vertikalen und horizontalen Reaktors mit Leitblechen (20) ausgestattet ist, die zu dem unteren Abschnitt des inneren Rohrs befestigt sind, und von dort nach außen über eine Strecke gerichtet sind, die in dem Bereich des 0,2 bis 0,3-fachen des Durchmessers des inneren Rohres (4) ist.

14. Vorrichtung nach den Ansprüchen 1 und 12, **dadurch gekennzeichnet, dass** die Leitbleche (20) von der Verbindungsstelle der vertikalen und horizontalen Reaktoren auf der gegenüberliegenden Seite zu dem Überhang (18) des äußeren Rohres des vertikalen Reaktors und symmetrisch in einem Winkel von 110-130 ° zueinander angeordnet sind.

15. Vorrichtung nach Anspruch 13, **dadurch gekennzeichnet, dass** die Leitbleche (20) der Reaktorverbindungsstelle sich in Bezug auf die Höhe von der oberen Kante (21) des horizontalen Reaktors zu der Höhe der Mischerschaufeln (19) erstrecken.

16. Vorrichtung nach Anspruch 1, **dadurch gekennzeichnet, dass** der horizontale Reaktor (3) mit Leitblechen ausgerüstet ist (22), welche um jeden Mischer (7) angeordnet sind, und welche zu den Wänden des horizontalen Reaktors gerichtet sind.

17. Vorrichtung nach Anspruch 1, **dadurch gekennzeichnet, dass** die Vorrichtung aus einer Kombination aus mehreren vertikalen und horizontalen Reaktoren besteht, wobei die Anzahl der vertikalen Reaktoren und der horizontalen Reaktoren, die mit ihnen verbunden ist, 2 bis 10 ist, wobei die horizontalen Reaktoren miteinander verbunden sind, und eine Trennwand (23), welche mit Durchflussöffnungen (24) versehen ist, zwischen jedem von ihnen angeordnet ist.

18. Vorrichtung nach Anspruch 17, **dadurch gekennzeichnet, dass** in der Kombination das innere Rohr (4) eines vertikalen Reaktors mit dem ringförmigen Abschnitt (16) eines anderen vertikalen Reaktors verbunden ist.

19. Vorrichtung nach Anspruch 17, **dadurch gekennzeichnet, dass** die Multireaktorkombination in einer U-Form angeordnet ist.

20. Verfahren zum Verarbeiten einer Aufschlämmung mit hohem Feststoffgehalt oder mit Feststoffen mit hohem spezifischen Gewicht und einem Gas, welches in eine offene Vorrichtung zugeführt (1), wobei in dem unteren Abschnitt von dieser ein hoher hydrostatischer Druck gebildet wird, wobei die Aufschlämmung und das Gas, welche darin eingespeist werden, dazu gebracht werden, nach unten in das innere Rohr (4) des mindestens einen offenen vertikalen Reaktor (2) zu fließen, und nach oben in das äußere Rohr (5) des vertikalen Reaktors, **dadurch gekennzeichnet, dass** die Suspension der Aufschlämmung und des Gases aus dem inneren Rohr (4) des vertikalen Reaktors auf einen zylindrischen horizontalen Reaktor geleitet (3) wird, welcher unterhalb des vertikalen Reaktors befestigt ist, um die Verweilzeit für die Reaktionen zwischen der Aufschlämmung und dem Gas zu verlängern, und die Suspension von dem horizontalen Reaktor in das äußere (5) des vertikalen Reaktors mittels Mischern (7) gezwungen wird, welche die Feststoffe verflüssigen und eine Zirkulationsströmung aus dem horizontalen Reaktor in den vertikalen Reaktor fördern.

21. Verfahren nach Anspruch 20, **dadurch gekennzeichnet, dass** das Volumen des horizontalen Reaktors (3) dimensioniert ist, um mindestens dem Volumen der Feststoffe in der Aufschlämmung, welche in der Vorrichtung verarbeitet wird, zu entsprechen.

22. Verfahren nach Anspruch 20, **dadurch gekennzeichnet, dass** um das Gas, welches mit der Aufschlämmung fließt, wieder in den Kreislauf von dem äußeren Rohr (5) des vertikalen Reaktors zu dem inneren Rohr (4) zu leiten, die Suspension aus Gas und Aufschlämmung gezwungen wird, um aus dem äußeren Rohr (5) in einen Expansionsabschnitt (8) des Oberteils und über die halsartige Kanalstruktur in das innere Rohr (4) zu fließen.

23. Verfahren nach Anspruch 22, **dadurch gekennzeichnet, dass** die Querschnittsfläche der halsartigen Kanalstruktur in Richtung der Mitte des Expansionsabschnitts kleiner wird (8) und die Strömungsgeschwindigkeit der Aufschlämmung auf den Bereich 0,9 - 1,2 m/s reguliert wird.

24. Verfahren nach Anspruch 20, **dadurch gekennzeichnet, dass** die Schaufeln (7) des horizontalen Reaktors (3) radiale Aufschlämmungs-Ströme erzielen, die gegeneinander laufen.

25. Verfahren nach den Ansprüchen 20 und 24, **dadurch gekennzeichnet, dass** die Ströme, welche gegeneinander laufen, mittels Leitblechen (20) gedämpft werden, welche an der Verbindungsstelle der Reaktoren und einem Überhang (18) des unteren Abschnitts des äußeren Rohres angeordnet sind, und die Richtung des Aufschlämmungs-Stroms abgezweigt wird, um in das äußere Rohr (3) zu steigen.

26. Verfahren nach Anspruch 20, **dadurch gekennzeichnet, dass** die Verarbeitung der Aufschlämmung und des Gases in einer Kombination aus mehreren vertikalen und horizontalen Reaktoren durchgeführt wird.

27. Verfahren nach Anspruch 26, **dadurch gekennzeichnet, dass** die Übertragung der Aufschlämmungs-Suspension von einer vertikalen und horizontalen Reaktorvorrichtung zur anderen über miteinander verbundene horizontale Reaktoren erfolgt.

28. Verfahren nach Anspruch 26, **dadurch gekennzeichnet, dass** die Aufschlämmungs-Suspension durch Leiten der Aufschlämmungs-Suspension aus dem inneren Rohr (4) eines vertikalen Reaktors zu dem ringförmigen Abschnitt (16) eines anderen vertikalen Reaktors wiederaufbereitet wird.

## Revendications

1. Appareil permettant de traiter une suspension épaisse à haute teneur en particules solides ou comportant des particules solides de poids spécifique élevé et un gaz injecté dans cette dernière, l'appareil (1) comprenant au moins un réacteur vertical ouvert (2), qui est constitué de deux tubes installés de façon emboîtée, dont un tube intérieur et un tube extérieur (4, 5), dans lequel le tube intérieur est équipé d'un mélangeur à écoulement descendant et d'éléments (17) destinés à intensifier l'injection de gaz, **caractérisé en ce qu'**un réacteur horizontal cylindrique (3) est fixé à la section inférieure du réacteur vertical, lequel est équipé de mélangeurs radiaux (7) qui fluidisent les particules solides et favorisent un écoulement de circulation du réacteur horizontal vers le tube extérieur (5) du réacteur vertical.

2. Appareil selon la revendication 1, **caractérisé en ce que** le volume du réacteur horizontal (3) fait 20 à 80 % du volume de la totalité de l'appareil (1).

3. Appareil selon la revendication 1, **caractérisé en ce que** la hauteur du réacteur vertical (2) fait plusieurs fois celle du diamètre D de sa section centrale.

4. Appareil selon la revendication 1, **caractérisé en ce qu'**une surface extérieure (10) et une surface intérieure (9) sont formées sur le tube intérieur dans une section d'expansion (8) de la partie supérieure du réacteur vertical, ce par quoi la superficie de section transversale de la section annulaire entre la surface extérieure du tube intérieur et le tube extérieur est au maximum la même que la superficie de section transversale de la section annulaire entre le tube intérieur (4) et le tube extérieur (5) des autres parties du réacteur vertical.

5. Appareil selon la revendication 4, **caractérisé en ce que** le diamètre du tube extérieur de la section d'expansion (8) de la partie supérieure du réacteur vertical fait 2 à 20 fois le diamètre D du tube extérieur (5) de la section centrale du réacteur.

6. Appareil selon les revendications 1 et 4, **caractérisé en ce que** les sections supérieures (12, 13) des surfaces extérieure et intérieure du tube intérieur sont conçues avec une forme conique.

7. Appareil selon les revendications 1 et 4, **caractérisé en ce qu'**un guide conique (15) orienté vers l'intérieur par rapport au rebord du tube extérieur (5) est situé au-dessus de la section supérieure (12, 13) du tube intérieur.

8. Appareil selon la revendication 7, **caractérisé en ce que** le guide conique (15) est conçu pour monter à partir du rebord du tube extérieur à un angle de 30 à 75° sur une distance qui fait 0,1 à 0,2 fois le diamètre de la section d'expansion (8) et pour ensuite descendre à un angle de 15 à 50°.

9. Appareil selon la revendication 1, **caractérisé en ce que** le tube intérieur (4) du réacteur vertical s'étend, au niveau de son bord inférieur, à l'intérieur du réacteur horizontal (3) sur une distance qui fait 0,1 à 0,14 fois la hauteur du réacteur horizontal.

10. Appareil selon la revendication 1, **caractérisé en ce que** les lames (19) de mélangeurs du réacteur horizontal sont situées à une hauteur qui fait 0,70 à 0,85 fois la hauteur du réacteur horizontal.

11. Appareil selon la revendication 1, **caractérisé en ce que** les mélangeurs du réacteur horizontal sont conçus pour tourner dans des sens contraires.

12. Appareil selon la revendication 1, **caractérisé en ce qu'**un débord (18) du rebord inférieur du tube extérieur (5) de réacteur vertical s'étend à l'intérieur du réacteur horizontal (3) dans le secteur de 100 à 140° par rapport au niveau des lames (19) des mélangeurs (7) de réacteur horizontal.

13. Appareil selon la revendication 1, **caractérisé en ce que** la jonction du réacteur vertical et du réacteur horizontal est équipée de déflecteurs (20), qui sont fixés à la section inférieure du tube intérieur et qui sont orientés, à partir de ladite section inférieure, vers l'extérieur sur une distance comprise dans la plage de 0,2 à 0,3 fois le diamètre du tube intérieur (4).

14. Appareil selon les revendications 1 et 12, **caractérisé en ce que** les déflecteurs (20) de la jonction du réacteur vertical et du réacteur horizontal sont situés du côté opposé au débord (18) du tube extérieur de réacteur vertical et symétriquement à un angle de 110 à 130° les uns par rapport aux autres.

15. Appareil selon la revendication 13, **caractérisé en ce que** les déflecteurs (20) de la jonction de réacteurs s'étendent, en termes d'élévation, du bord supérieur (21) du réacteur horizontal jusqu'à la hauteur des lames (19) de mélangeurs.

16. Appareil selon la revendication 1, **caractérisé en ce que** le réacteur horizontal (3) est équipé de déflecteurs (22) situés autour de chaque mélangeur (7) et orientés en direction des parois du réacteur horizontal.

17. Appareil selon la revendication 1, **caractérisé en ce que** l'appareil est constitué d'une combinaison de plusieurs réacteurs verticaux et horizontaux, le nombre de réacteurs verticaux et de réacteurs horizontaux étant fixés entre 2 et 10, les réacteurs horizontaux étant raccordés les uns aux autres et une cloison de séparation (23) pourvue d'ouvertures d'écoulement (24) étant située entre chacun d'entre eux.

18. Appareil selon la revendication 17, **caractérisé en ce que** dans la combinaison le tube intérieur (4) d'un réacteur vertical est raccordée à la section annulaire (16) d'un autre réacteur vertical.

19. Appareil selon la revendication 17, **caractérisé en ce que** la combinaison multi-réacteur est organisée suivant une forme de U.

20. Procédé permettant de traiter une suspension épaisse à haute teneur en particules solides ou comprenant des particules solides de poids spécifique élevé et un gaz injecté dans cette dernière dans un appareil ouvert (1), dans la section inférieure duquel est formée une haute pression hydrostatique, ce par quoi la suspension épaisse et le gaz qui est injecté dans cette dernière sont amenés à s'écouler vers le bas dans le tube intérieur (4) d'au moins un réacteur vertical ouvert (2), le tube intérieur (4) étant équipé d'un mélangeur à écoulement descendant et d'éléments (17) servant à intensifier l'injection de gaz, et à monter dans le tube extérieur (5) du réacteur vertical, **caractérisé en ce que** la suspension de suspension épaisse et de gaz est orientée du tube intérieur (4) du réacteur vertical vers un réacteur horizontal cylindrique (3) qui est équipé de mélangeurs radiaux (7), fixés au-dessous du réacteur vertical afin d'augmenter le temps de résidence des réactions entre la suspension épaisse et le gaz et, à partir du réacteur horizontal, la suspension est amenée à monter dans le tube extérieur (5) du réacteur vertical au moyen de mélangeurs radiaux (7) qui fluidisent les particules solides et favorisent un écoulement de circulation du réacteur horizontal vers le réacteur vertical.

21. Procédé selon la revendication 20, **caractérisé en ce que** le volume du réacteur horizontal (3) est dimensionné pour correspondre au minimum au volume de particules solides présentes dans la suspension épaisse à traiter dans l'appareil.

22. Procédé selon la revendication 20, **caractérisé en ce que**, afin d'orienter le gaz s'écoulant avec la suspension épaisse pour qu'il circule de nouveau du tube extérieur (5) du réacteur vertical vers le tube intérieur (4), la suspension de gaz et de suspension épaisse est amenée à s'écouler du tube extérieur (5) dans un espace d'expansion (8) de la section supérieure et à travers sa structure de canal de en forme de gosier dans le tube intérieur (4).

23. Procédé selon la revendication 22, **caractérisé en ce que** la superficie de la section transversale de la structure de canal de en forme de gosier s'amenuise en s'approchant du centre de la section d'expansion (8) et **en ce que** la vitesse d'écoulement de la suspension épaisse est régulée dans la plage de 0,9 à 1,2 m/s.

24. Procédé selon la revendication 20, **caractérisé en ce que** les lames (7) du réacteur horizontal (3) fournissent des écoulements radiaux de suspension épaisse qui se font les uns contre les autres.

25. Procédé selon les revendications 20 et 24, **caractérisé en ce que** les écoulements qui se font les uns contre les autres sont atténués au moyen de déflecteurs (20) situés au niveau de la jonction des réacteurs et d'un débord (18) de la section inférieure du tube extérieur et **en ce que** la direction d'écoulement de suspension épaisse est déviée pour monter dans le tube extérieur (3).

26. Procédé selon la revendication 20, **caractérisé en ce que** le traitement de la suspension épaisse et du gaz est effectué dans une combinaison de plusieurs réacteurs verticaux et horizontaux.

27. Procédé selon la revendication 26, **caractérisé en ce que** le transfert de la suspension épaisse à partir d'un dispositif de réacteurs vertical et horizontal vers un autre se fait par le biais de réacteurs horizontaux raccordés les uns aux autres.

28. Procédé selon la revendication 26, **caractérisé en ce que** la suspension épaisse est recyclée par orientation de cette dernière du tube intérieur (4) d'un réacteur vertical vers la section annulaire (16) d'un autre réacteur vertical.
